# EUROPEAN PATENT APPLICATION

(11) **EP 3 576 086 A2**
(43) Date of publication of application: **04.12.2019**
(21) Application number: 19170483.2
(22) Date of filing: 23.04.2019
(51) Int. Cl.: G10L 15/26, G10L 21/0216, A63F 13/424, H04N 5/44

(54) **VOICE-CONTROLLED DISPLAY DEVICE AND METHOD FOR EXTRACTING VOICE SIGNALS**

(30) Priority: 31.05.2018 TW 107118622
(71) Applicant: Giga-Byte Technology Co., Ltd., New Taipei City (TW)
(72) Inventor: LIN, Cheng-Lung, New Taipei City (TW); CHANG, Yen-Yun, New Taipei City (TW); HUANG, Chic-Chen, New Taipei City (TW); CHANG, Shih-Pin, New Taipei City (TW)
(74) Representative: dompatent von Kreisler Selting Werner - Partnerschaft von Patent- und Rechtsanwälten mbB

(57) **Abstract**

A voice-controlled display device comprises a display panel, a signal input port, two microphones, a microprocessor and a display controller. The signal input port is configured to receive a first video signal from a host. Each of the microphone comprises a sound-receiving terminal for receiving an external audio, wherein the sound-receiving terminal is disposed adjacent to the display panel and the sound-receiving terminal and the display panel are located on the same side of the voice-controlled display device. The microprocessor electrically connects to the microphones and the microprocessor performs a voice recognition procedure to obtain an instruction according to the external audio. The display controller electrically connects to the signal input port, the display panel and the microprocessor, wherein the display controller transforms the first video signal to a second video signal and the display panel display one of the first video signal and the second video signal.

## Description

### CROSS-REFERENCE TO RELATED APPLICATIONS

This non-provisional application claims priority under 35 U.S.C. § 119(a) on Patent Application No(s). 107118622 filed in Taiwan, ROC on May 31, 2018, the entire contents of which are hereby incorporated by reference.

### BACKGROUND

### 1. Technical Field

The disclosure relates to a display device and a method for extracting voice signals, more particularly to a voice-controlled display device which the display is controlled by voices and a method for extracting voice signals via two microphones.

### 2. Related Art

Currently, the computer screens on the market provide variable user-adjusted display mode settings, such as the brightness, the contrast, the color temperature, the horizontal position, the vertical position, and the scanning frequency, etc. Particularly, the user needs to manually press or touch the physical button located at the bottom, side or back of the screen. Hence, the display mode is able to be adjusted according to the user's preference. However, the number of physical buttons disposed on most of the computer screens is limited, so it is common to design a button with multiple functions. For example, for the same button, the user is able to call the main menu as the button is pressed for once, and then the user is able to enter the selected sub-menu as the button is pressed again in a few seconds.

### SUMMARY

According to one or more embodiment of this disclosure, a voice-controlled display device comprises a display panel, a signal input port, a first microphone, a second microphone, a microprocessor and a display controller. The signal input port receives a first video signal from a host. The first microphone comprises a first sound-receiving terminal for receiving an external audio, wherein the first sound-receiving terminal is disposed adjacent to the display panel. The second microphone comprises a second sound-receiving terminal for receiving an external audio, wherein the second sound-receiving terminal is disposed adjacent to the first sound-receiving terminal and the display panel, and the second sound-receiving terminal and the display panel are located at the same side of the voice-controlled display device. The microprocessor performs a voice recognition procedure to obtain an instruction according to the external audio. The display controller electrically connects to the signal input port, the display panel and the microprocessor, wherein the display controller transforms an image corresponding to the first video signal to an image corresponding to the second video signal, and the display panel displays the image corresponding to one of the first video signal and the second video signal.

According to one or more embodiment of this disclosure, a method for extracting voice signals comprises the following steps. A first microphone and a second microphone receives two external audio signals respectively, wherein a first receiving terminal of the first microphone and a second receiving terminal of the second microphone are located at the same side of a voice-controlled display device. A microprocessor calculates two waveforms of said two external audio signals, and then the microprocessor calculates a difference between said two waveforms. The microprocessor performs a voice recognition procedure when the difference is smaller than a threshold, or drops said two waveforms when the difference is larger than or equals to the threshold.

### BRIEF DESCRIPTION OF THE DRAWINGS

The present disclosure will become more fully understood from the detailed description given hereinbelow and the accompanying drawings which are given by way of illustration only and thus are not limitative of the present disclosure and wherein:
FIG. 1 is a block structure diagram of the voice-controlled display device in an embodiment according to this disclosure.
FIG. 2 is a diagram shown the positions of the display panel and the sound-receiving terminal in an embodiment according to this disclosure.
FIG. 3 is a diagram shown the polar pattern and the coverage angle in an embodiment according to this disclosure.
FIG. 4A is a diagram shown the image of the display panel when the display panel receives the first video signal.
FIG. 4B is a diagram shown the image of the display panel when the display panel receives the second video signal.
FIG. 5 is a flowchart of the method for extracting the voice signal.

### DETAILED DESCRIPTION

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawings.

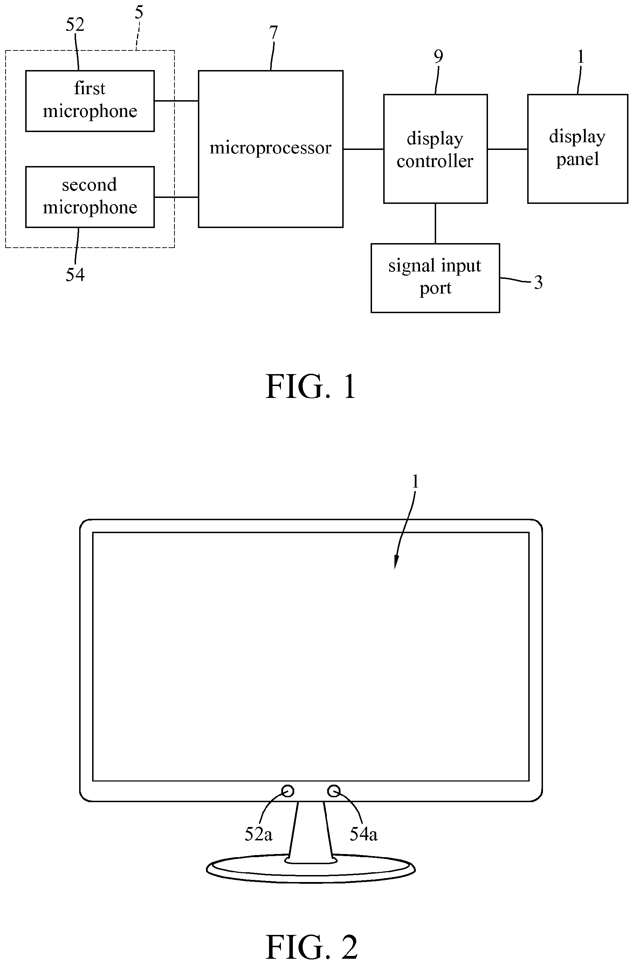

Please refer to FIG. 1 which is a block structure diagram of the voice-controlled display device in an embodiment according to this disclosure. The voice-controlled display device comprises a display panel 1, a signal input port 3, a microphone 5, a microprocessor 7 and a display controller 9.

The display panel 1 is an element for showing an image, and the user is able to view the image via the display panel 1. In practice, the display panel 1 may be the twisted nematic (TN) panel, the in-plane-switching (IPS) panel or the vertical alignment (VA) panel. However, the hardware structure of the display panel 1 is not limited by aforementioned examples.

The signal input port 3 is adapted for receiving the first video signal from a host, wherein the host may be such as a personal computer (PC), a server, a smart phone or a tablet having the central processing unit (CPU). However, the host is not limited by aforementioned examples. In practice, the signal input port 3 may be the interface such as the D-SUB (subminiature), the digital video interface (DVI), the high definition multimedia interface (HDMI) or the DisplayPort (DP).

The microphone 5 is adapted for receiving the external audio. In practice, the microphone 5 may be a microelectromechanical systems (MEMS) microphone. It is worth to emphasizing that, the configuration of two microphones as the first microphone 52 and the second microphone 54 shown in FIG. 1 in an embodiment of this disclosure. The microphone 5 has a sound-receiving terminal adapted for receiving the external audio, wherein the sound-receiving terminal is preferable to be disposed at the position adjacent to the display panel 1. Also, the sound-receiving terminal and the display panel 1 are located on the same side of the voice-controlled display device. Please refer to FIG. 2, FIG. 2 shows the diagram which the first sound-receiving terminal 52a of the first microphone 52 and the second sound-receiving terminal 54a of the second microphone 54 are disposed adjacent to the display panel 1. As FIG. 2 shows, the first sound-receiving terminal 52a, the second sound-receiving terminal 54a and the display panel 1 are all located at the same side (or thw same surface) of the voice-controlled display device, wherein the side (or the surface) faces to the user.

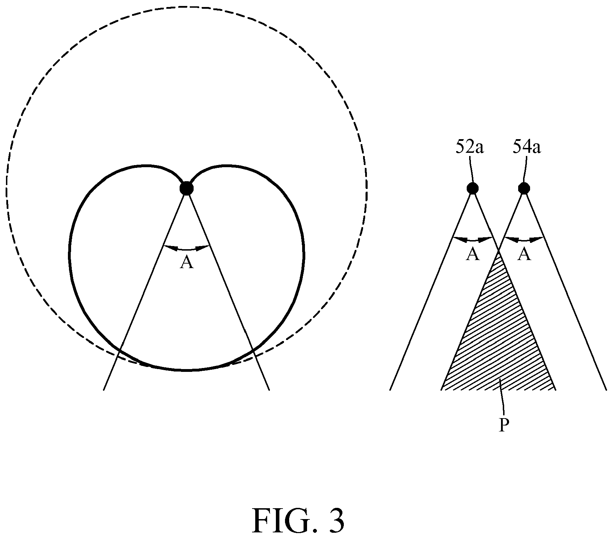

Please refer to FIG. 3, which is a diagram shown the polar pattern and the coverage angle in an embodiment according to this disclosure. In an embodiment of this disclosure, the first microphone 52 and the second microphone 54 are the directional microphones with the same specifications, and the polar pattern is heart-shaped, such as a cardioid. In addition, the directional microphone may be a shotgun microphone. As the polar pattern shown at the left part in FIG. 3, the zone of the cardioid is a coverage angle of a directional microphone. Furthermore, in front of the microphone, the zone formed by the angle A is the best coverage angle of the directional microphone. In an embodiment of this disclosure, the angle A is from 15 to 60 degrees, and the angle A may be set as 45 degrees in practice. In addition, the distance between the first sound-receiving terminal 52a and the second sound-receiving terminal 54a is from 2 cm to 4 cm. Please refer to the right part in FIG. 3. A coverage angular range of the first microphone 52 and the coverage angular range of the second microphone 54 overlap with each other to define an intersectional area P, wherein the intersectional area P indicates the best coverage angle of the two microphones. In practice, the range of the intersectional area P is able to be changed through adjusting the distance between the first sound-receiving terminal 52a and the second sound-receiving terminal 54a, or adjusting the angle between two facing directions of the two sound-receiving terminals.

Please refer to FIG. 1. The microprocessor 7 is electrically connected to the first microphone 52 and the second microphone 54 for receiving the external audio. In practice, after the external audio is received by the microphone, the analog signal of the external audio is able to be transformed to the digital signal through the built-in analog-to-digital converter (ADC) of the microelectromechanical (MEMS) directional microphone or the external ADC chip. Moreover, the digital voice signal received by the first microphone 52 and the second microphone 54 is sent to the microprocessor 7 via I²S (inter-IC sound or integrated interchip sound) interface, and the microprocessor 7 further performs a voice recognition procedure according to the external audio for obtaining an instruction. In practice, the microprocessor 7 may be an integrated circuit (IC) or a micro control unit (MCU) for voice recognition, but the hardware structure of the microprocessor 7 is not limited by aforementioned examples. In addition, in an embodiment of this disclosure, the microprocessor 7 further comprises a firmware update interface. Since the firmware update interface is adapted for downloading the speech recognition database with different languages, the voice-controlled display device disclosed by this disclosure is able to be used in different countries.

In an embodiment of this disclosure, the voice recognition procedure is mainly associated to an algorithm. Specifically, after the microprocessor 7 obtains the external audio, the voice recognition procedure calculates a time difference between two microphones receiving the same voice. When the time difference is smaller a threshold, the voice recognition procedure uses the external audio to perform the voice recognition for obtaining the voice instruction included in the external audio. When the time difference is larger or equals to than the threshold, the voice recognition procedure drops the external audio. The setting of the threshold is associated with the distance between the first sound-receiving terminal 52 and the second sound-receiving terminal 54. In another aspect, when the external audio is generated at the place out of the intersectional area P and is received by the microphone 5, the voice recognition procedure is able to exclude the voice signal such as aforementioned example. Hence, it could make the voice-controlled display device avoid to mistake the environmental noise as the voice instruction. Base on aforementioned mechanics, the microprocessor 7 is able to perform the voice recognition for the voice signal in the range of the intersectional area P in an embodiment of this disclosure. On the other hand, in addition to the time difference, the intensity difference or other measurements which are able to show the distance of the voice transmission could also be used as the criterion, and this disclosure is not limited by aforementioned measurements.

Please refer to FIG. 1. The display controller 9 is electrically connected to the signal input port 3, the display panel 1 and the microprocessor 7. Generally, the display controller 9 is adapted for showing an image corresponding to the image signal sent from the host on the display panel 1 to the user. In practice, the display controller 9 may be a system on chip (SoC) and is electrically connected to the microprocessor 7 via universal asynchronous receiver/transmitter (UART) interface for receiving the instruction. In an embodiment of this disclosure, the display controller 9 is further adapted for transforming an image corresponding to the first video signal to an image corresponding to the second video signal according to the instruction obtained during the voice recognition procedure. Furthermore, the display panel 1 is adapted for showing the image corresponding to one of the first video signal or the second video signal. The image corresponding to the first video signal is an original image sent from the host. In the image corresponding to the first video signal shown on the display panel 1, the display controller 9 is able to set a default display area. From an aspect in an embodiment, the second video signal generated by the display controller 9 corresponds to a PIP (picture in picture) image that shows another image in the default display area, wherein the another image overlaps a part of the image corresponding to the first video signal. For example, when the instruction (received through the form of the voice) indicates to increase the brightness, the display controller 9 shows the information about the current brightness of the display panel 1 by an image or words in the default display area. Hence, the user is able to know whether the voice-controlled display device finishes the adjustment corresponding to the instruction.

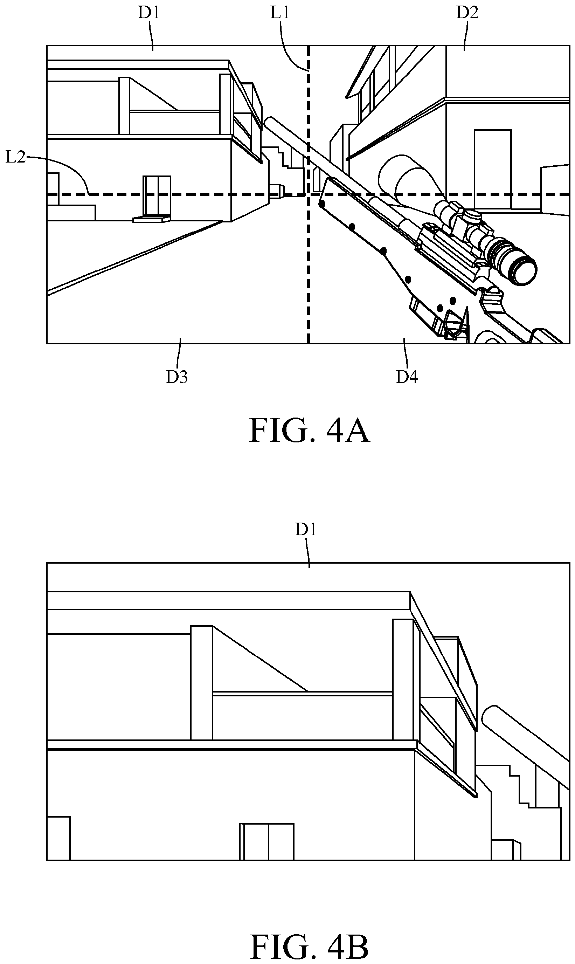

From another aspect, the second video signal may be an enlarging signal, so that the image corresponding to the second video signal includes an enlarged image of the default display area. For example, the player often needs to enlarge a part of the image for viewing more clearly and operating more preciously during the video game. Please refer to FIG. 4A and FIG. 4B together. FIG. 4A is a diagram shown the image of the display panel when the display panel receives the first video signal, wherein the image shows the screen of the first-person view in a shooing game. Specifically, the screen includes 4 default display areas D1 to D4 divided by division line L1 and L2. When the player speaks out the voice instruction "enlarge the upper left corner", the instruction recognized by the microprocessor 7 is able to drive the display controller 9 to enlarge the image corresponding to the first video signal contained in the default display area D1 to the image corresponding to the second video signal. Also, as FIG. 4B shows, the display controller 9 shows the image corresponding to the second video signal on the display panel 1. As a result, the player is able to confirm whether a shooting target existed in the default display area D1; alternatively, the player is able to shoot the target more preciously. Hence, the fun and the experience during the game may be improved.

In another embodiment of this disclosure, the voice-controlled display device further comprises a light module electrically connected to the display controller 9. Also, the light module is adapted for emitting a light with a specified color according to the instruction. In practice, the light module may be a light emitting diode (LED) disposed at the back of the display panel 1 in the voice-controlled display device. The emitting time and the color of the light are able to be controlled via the instruction, wherein the instruction is the voice instruction received by the first microphone 52 and the second microphone 54 on the front of the display panel 1. Compared to the conventional display device which is only adapted for outputting an image, the voice-controlled display device disclosed by this disclosure is further used as an inputting device adapted for controlling the peripheral light. Hence, the visual experience may be improved when the user watches the screen. In addition, in comparison with the light module provided by the conventional game host whose setting is only able to be edited through the operation interface of the manufacture, the control method of the voice instruction used by the voice-controlled display device in an embodiment of this disclosure provides a simpler and more intuitive way to control or set the parameter. As a result, the user does not need to spend extra time to learn how to control or set the parameter.

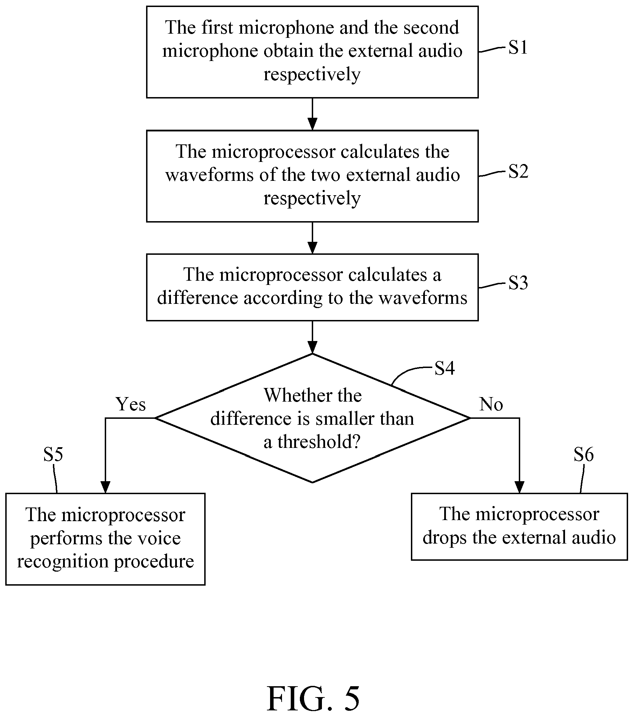

Please refer to FIG. 5. FIG. 5 is a flowchart of the method for extracting the voice signal. The method is adapted for aforementioned voice-controlled display device. Please refer to step S1: the first microphone 52 and the second microphone 54 obtain the external audio respectively. Specifically, the external audio may be a screen control instruction sent by the user, or a starting instruction triggering the microprocessor 7 to start performing the voice recognition procedure. Please refer to step S2: the microprocessor 7 calculates the waveforms of the two external audio respectively. Particularly, this step is adapted for determining the parts corresponding to the same voice signal and included in the external audio obtained by the first microphone 52 and the second microphone 54 respectively. Particularly, the external audio recorded by the first microphone 52 and the second microphone 54 may comprise a plurality of waveforms. For example, the first waveform is the ambient noise recorded from the outside of the intersectional area P shown in FIG. 3, and the second waveform is the speech of the user recorded in the intersectional area P. Please refer to step S3: the microprocessor 7 calculates a difference according to aforementioned waveforms, wherein the difference may be a time difference or an intensity difference. For the aforementioned example, the microprocessor 7 calculates the difference between the first waveforms recorded by the first microphone 52 and the second microphone 54 respectively, and the microprocessor 7 calculates the difference between the second waveforms recorded by the first microphone 52 and the second microphone 54 respectively. Please refer to step S4 to step S5: when the difference is smaller than a threshold, the microprocessor 7 performs the voice recognition procedure for obtaining the instruction according to the waveforms which the difference is smaller than a threshold (for the aforementioned example, the waveforms are the second waveforms). On the other hand, when the difference is larger than or equals to the threshold, please refer to step S4 to step S6: the microprocessor 7 drops the waveforms which the difference is larger than or equals to the threshold (for the aforementioned example, the waveforms are the first waveforms) for avoiding outputting the voice instruction which is not generated by the user.

As a result, the voice-controlled display device disclosed by this disclosure uses two directional microphones disposed at the same side of the display panel to receive the same external audio. Furthermore, the external audio recorded from the outside of the best sensitive angular range is considered as the ambient noise and is filtered out. Since the method for extracting the voice signal disclosed by this disclosure does not use the conventional way which the ambient noise is deducted from the external audio by the hardware circuit, the reorganization of the ambient noise may be improved through the algorithm which is able to be adjusted continuously and preciously. Hence, the voice recognition procedure performed by the microprocessor is able to recognize the voice sent from the user and output the corresponding voice instruction, and the display controller further uses the voice instruction to transform a first image to a second image. Also, the display controller shows the first image and the second image via the display panel. Therefore, the common user is able to change the display mode of the screen easily for achieving the best screen viewing experience. On the other hand, for the professional video game player, the scene and the display are able to be switched currently during the game, so the player does not need to spend extra time for switching the scene or the display manually during the game. For these reasons, the voice-controlled display device and the method for extracting the voice signal disclosed by this disclosure provides a friendlier way to control the screen, and the operation experience during the game is able to be improved.

## Claims

1. A voice-controlled display device, comprising:
a display panel (1);
a signal input port (3) configured to receive a first video signal from a host,
a first microphone (52) comprising a first sound-receiving terminal (52a) for receiving an external audio, wherein the first sound-receiving terminal (52a) is disposed adjacent to the display panel (1), and the first sound-receiving terminal (52a) and the display panel (1) are located on the same side of the voice-controlled display device;
a second microphone (54) comprising a second sound-receiving terminal (54a) for receiving the external audio, wherein the second sound-receiving terminal (54a) is disposed adjacent to the display panel (1) and the first sound-receiving terminal (52a), and the second sound-receiving terminal (54a) and the display panel (1) are located on the same side of the voice-controlled display device;
a microprocessor (7) electrically connecting to the first microphone (52) and the second microphone (54), wherein the microprocessor (7) performs a voice recognition procedure to obtain an instruction according to the external audio; and
a display controller (9) electrically connecting to the signal input port (3), the display panel (1) and the microprocessor (7), wherein the display controller (9) transforms the first video signal to a second video signal according to the instruction, and the display panel (1) displays an image corresponding to one of the first video signal and the second video signal.

2. The voice-controlled display device of claim 1, **characterized in that** a distance between the first sound-receiving terminal (52a) and the second sound-receiving terminal (54a) is 2-4 centimeters.

3. The voice-controlled display device of claim 1, **characterized in that** the first microphone (52) and the second microphone (54) are directional microphones.

4. The voice-controlled display device of claim 3, **characterized in that** a coverage angle (A) of each of the directional microphones is 15-60 degrees, and a coverage angular range of the first microphone (52) and a coverage angular range of the second microphone (54) overlap with each other to define an intersectional area (P).

5. The voice-controlled display device of claim 1, **characterized in that** an image corresponding to the first video signal comprises a default display area (D1, D2, D3, D4), and according to the instruction, an image corresponding to the second video signal generated by the display controller (9) and transformed from the first video signal has an enlarged image of the default display area (D1).

6. The voice-controlled display device of claim 1 further comprising a light module electrically connecting to the display controller (9), **characterized in that** the light module is configured to emit a light with a specified color according to the instruction.

7. A method for extracting voice signals comprising:
receiving two external audio signals by a first microphone (52) and a second microphone (54) respectively, wherein a first receiving terminal of the first microphone (52) and a second receiving terminal of the second microphone (54) are located on the same side of a voice-controlled display device;
calculating two waveforms of said two external audio signals by a microprocessor (7);
calculating a difference between said two waveforms by the microprocessor (7);
performing a voice recognition procedure to obtain an instruction according to the external audio by the microprocessor (7) when the difference is smaller than a threshold, or dropping said two waveforms by the microprocessor (7) when the difference is larger than or equals to the threshold.

8. The method for extracting voice signals of claim 7, **characterized in that** the difference is a time difference or an intensity difference.

9. The method for extracting voice signals of claim 7, **characterized in that** a distance between the first sound-receiving terminal (52a) and the second sound-receiving terminal (54a) is 2-4 centimeters.

10. The method for extracting voice signals of claim 7, **characterized in that** the first microphone (52) and the second microphone (54) are directional microphones.

11. The method for extracting voice signals of claim 10, **characterized in that** a coverage angle (A) of each of the directional microphones is 15-60 degrees, and a coverage angular range of the first microphone (52) and a coverage angular range of the second microphone (54) overlap with each other to define an intersectional area (P).
